# EUROPÄISCHE PATENTSCHRIFT

(11) **EP 1 285 801 B1**
(45) Veröffentlichungstag und Bekanntmachung des Hinweises auf die Patenterteilung: **07.03.2007**
(21) Anmeldenummer: 02017988.3
(22) Anmeldetag: 12.08.2002
(51) Int. Cl.: B60J 7/12, B60J 1/18

(54) **Cabriolet-Fahrzeug mit einem starren hinteren Dachteil**
Convertible vehicle with a rigid rear roof element
Véhicule convertible avec un élément de toit arrière rigide

(30) Priorität: 22.08.2001 DE 10140232
(43) Veröffentlichungstag der Anmeldung: 26.02.2003
(73) Patentinhaber: Wilhelm Karmann GmbH, 49084 Osnabrück (DE)
(72) Erfinder: Russke, Klaus, 49143 Bissendorf (DE); Aydt, Matthias, 71735 Eberdingen (DE); Bunsmann, Winfried, 49143 Bissendorf (DE); Steuernagel, Jörg, 49134 Wallenhorst (DE); Oberhoff, Thomas, 49186 Bad Iburg (DE); Dziubiel, Marian, 49074 Osnabrück (DE); Exner, Markus, 49191 Belm (DE)

(56) Entgegenhaltungen:
- EP-A- 0 764 553
- EP-A- 1 092 579

## Beschreibung

Die Erfindung betrifft ein Cabriolet-Fahrzeug mit einem starren hinteren Dachteil nach dem Oberbegriff des Anspruchs 1.

Es ist bekannt, derartige Cabriolet-Fahrzeuge mit einem aus mehreren festen Dachteilen bestehenden Dach zu versehen. Beispielsweise schließt sich an das hintere Dachteil ein in geschlossener Stellung im wesentlichen horizontal angeordnetes vorderes Dachteil an, das zum Öffnen des Daches gegen das hintere Dachteil einschwenkt, so daß das Paket aus den beiden dann im wesentlichen parallel zueinanderliegenden Dachteilen im rückwärtigen Fahrzeugbereich aufgenommen werden kann.

Ein derartiges Paket aus zwei oder mehr festen Dachteilen nimmt einen erheblichen Raum ein, wodurch der für den Kofferraum verbleibende Karosseriebereich eingeschränkt wird. Insbesondere wenn die Dachteile gegeneinander einwärts verschwenken, kommt es aufgrund der dann gegenläufigen Krümmungen zu einer erheblichen dicken Ausdehnung des abgelegten Paketes. Andererseits eröffnet das starre hintere Dachteil die Möglichkeit, eine Heckscheibe aus Glas zu integrieren, ohne teure Klebe- oder Schweißverbindungen zu umliegenden textilen Randbereichen herstellen zu müssen. Die Montage und Demontage einer Heckscheibe ist daher bei festen Dachteilen erleichtert. Zudem besteht die Möglichkeit, ein hinteres Dachteil vollständig aus Glas oder einem transparenten Kunststoff auszubilden und Bereiche, die nicht durchsichtig sein müssen, mit einer entsprechenden Beschichtung zu versehen.

Aus der DE 196 39 567 C2 ist ein Cabriolet-Fahrzeug mit einem hinteren starren Dachteil bekannt, das bevorzugtermaßen als Hardtop-Teil aus einem Verbundglaswerkstoff besteht. In Fahrtrichtung vor diesem hinteren starren Dachteil ist ein faltbarer flexibler Dachbereich vorgesehen. Sowohl der hintere starre Dachteil als auch der vordere flexible Dachbereich sind in einem im rückwärtigen Fahrzeugbereich vorgesehenen Ablageraum in der Offenstellung des Fahrzeuges abzulegen. Dazu verschwenkt nach dem Öffnen der Verdeckkastenabdeckung zunächst das hintere starre Dachteil um eine im Uhrzeigersinn ausgerichtete Schwenkbewegung, so daß die Seitenbereiche des hinteren starren Dachteils in der Ablegeposition nach oben hinweisen.

Auf dieses abgelegte hintere starre Dachteil ist dann der flexible Dachbereich zu legen, wonach der Verdeckkasten durch die Abdeckung verschlossen werden kann. Mit dieser Ausbildung einer Dachkonstruktion ist der Vorteil verbunden, die Heckscheibe in den hinteren Dachteil zu integrieren. Nachteilig bei dieser Ausbildung ist jedoch, daß der flexible Dachbereich auf dem abgelegten hinteren starren Dachteil abzulegen ist, so daß insbesondere auch von der Höhe her ein erheblicher Raum zum Ablegen des Daches insgesamt zur Verfügung gestellt werden muss. Zudem ist nach dem Öffnen der Verdeckkastenabdeckung der flexible Dachbereich frei zu gänglich, womit Verschmutzungs- und Verschleißrisiken einhergehen.

Aus der EP 0 764 553 A1 ist ein Cabriolet-Fahrzeug bekannt, bei dem ein mittleres festes Dachteil unter ein rückwärtiges Dachteil geschoben werden kann. Das hintere Dachteil mit eingeschobenem mittleren Dachteil ist durch eine Überkopfeinschwenkbewegung in einen hinteren Verdeckdeckelkasten zu verschwenken, so daß in dieser Stellung das mittlere Dachteil nach oben zeigt. Dieses so gebildete Paket weist wiederum erhebliche Packmaße auf, daß den für den Kofferraum verbleibenden Karosseriebereich erheblich einschränkt.

Der Erfindung liegt daher das Problem zugrunde, ein Cabriolet-Fahrzeug zu schaffen, das die Vorteile eines starren hinteren Dachteils bietet und dennoch ein geringes mögliches Packmaß für das abgelegte Dach erreicht wird.

Die Erfindung löst das Problem durch ein Cabriolet-Fahrzeug mit den Merkmalen des Anspruchs 1. Vorteilhafte Ausgestaltungen sind in den Ansprüchen 2 bis 9 angegeben.

Mit der Ausbildung eines flexiblen vorderen Dachbereiches kann dieser in ein kleines Packmaß zusammengefaltet werden. Dennoch kann aufgrund des starren hinteren Dachteils die Heckscheibe in der erwähnten einfachen Weise montiert und demontiert werden. Die Vorteile eines Festverdecks und eines flexiblen Dachs sind daher erfindungsgemäß kombiniert.

Der vordere Dachbereich ist zumindest teilweise unter das hintere Dachteil verlagerbar und mit diesem ablegbar. Dadurch kann die Länge des abgelegten Pakets im wesentlichen durch das Längsausmaß des hinteren Dachteils bestimmt werden, wodurch der Platzbedarf des abgelegten Daches besonders gering ist. Dies gilt insbesondere, wenn der vordere Dachbereich vollständig unter das hintere Dachteil verlagerbar ist.

Weitere Vorteile und Merkmale der Erfindung ergeben sich aus einem nachfolgend beschriebenen und in der Zeichnung dargestellten Ausführungsbeispiel der Erfindung, bei dem das vordere, flexible Dachteil sich von dem starren Dachteil bis zu einem Windschutzscheibenrahmen erstreckt, was nicht zwingend ist, und in Längsrichtung verkürzbar ist, was ebenfalls nicht unbedingt erforderlich ist.

In der Zeichnung zeigt:
- Fig. 1: eine perspektivische Ansicht von schräg hinten auf einen mittleren Teilbereich eines erfindungsgemäßen Cabriolet-Fahrzeugs bei geschlossenem Dach,
- Fig. 2: eine Seitenansicht auf das geschlossene Dach aus Richtung des Pfeils II in Fig. 1,
- Fig. 3: eine ähnliche Ansicht wie Fig. 2 während der beginnenden Öffnung des Daches,
- Fig. 4: eine Seitenansicht auf das sich öffnende Dach aus Richtung des Pfeils IV in Fig. 3,
- Fig. 5: eine ähnliche Ansicht wie Fig. 3 bei weiter fortschreitender Dachöffnung,
- Fig. 6: eine Seitenansicht auf das sich weiter öffnende Dach aus Richtung des Pfeils VI in Fig. 5,
- Fig. 7: eine ähnliche Ansicht wie Fig. 5 bei weiterer Dachöffnung,
- Fig. 8: eine Seitenansicht auf das sich weiter öffnende Dach aus Richtung des Pfeils VIII in Fig. 7,
- Fig. 9: eine ähnliche Ansicht wie Fig. 7 bei weiterer Dachöffnung,
- Fig. 10: eine Seitenansicht auf das sich weiter öffnende Dach aus Richtung des Pfeils X in Fig. 9,
- Fig. 11: eine ähnliche Ansicht wie Fig. 9 bei weiterer Dachöffnung,
- Fig. 12: eine Seitenansicht auf das sich weiter öffnende Dach aus Richtung des Pfeils XII in Fig. 11,
- Fig. 13: eine ähnliche Ansicht wie Fig. 11 bei weiterer Dachöffnung,
- Fig. 14: eine Seitenansicht auf das sich weiter öffnende Dach aus Richtung des Pfeils XIV in Fig. 13,
- Fig. 15: eine ähnliche Ansicht wie Fig. 13 bei vollständiger Dachöffnung,
- Fig. 16: eine Seitenansicht auf das sich vollständig geöffnete Dach aus Richtung des Pfeils XVI in Fig. 15.

Das Cabriolet-Fahrzeug 1 gemäß dem dargestellten Ausführungsbeispiel umfaßt ein Dach mit einem festen hinteren Dachteil 2 und einen daran in Fahrtrichtung F anschließenden flexiblen Dachbereich 3.

Dieser umfaßt den beiden Fahrzeugseiten jeweils zugeordnete seitliche Rahmenteile 4, 5, die im geschlossenen Zustand des Daches fluchtend hintereinander liegen. Dabei erstreckt sich das erste Rahmenteil 4 von einem Windschutzscheibenrahmen 6 oder einem festen vorderen Querende 36 des Daches bis zu einer zwischen den Rahmenteilen 4, 5 liegenden Trennfuge 7. Das hintere Rahmenteil erstreckt sich von der Trennfuge 7 bis zum hinteren Dachteil 2. Auch eine andere Anzahl von seitlichen Rahmenteilen ist möglich. Die Rahmenteile sind durch Querspriegel 9, 10, 11 miteinander verbunden. Über diese ist ein insgesamt mit 12 bezeichneter Dachbezug gespannt. Der hintere Spriegel 11 ist im geschlossenen Zustand unmittelbar vor dem hinteren Dachteil 2 gehalten und bildet eine Art Spannleiste für den rückseitigen Abschluß 13 des Dachbezugs 12. Zudem ist ein vorderes Synchronisationsgestänge 8 vorgesehen, das wie die Spriegel 9, 10, 11 den Dachbezug 12 quer unterläuft. Damit kann bei der unten beschriebenen Dachverkürzung eine gleichmäßige Bewegung der beiden Dachseiten parallel zur Fahrzeuglängsrichtung erreicht werden.

Im Bereich des hinteren Spriegels 11 ist an jeder Fahrzeugseite je ein Antriebsorgan 14 - hier als Hydraulikzylinder ausgebildet- angeordnet, der sich von dem Spriegel 11 bis zu einem Gelenk 15 erstreckt, das im Bereich der Trennfuge 7 angeordnet ist und um zumindest eine vertikale Achse 16 aufschwenkbar ist. Das Antriebsorgan 14 ist von dem Bezug 12 überdeckt. Sein vorderes Ende ist weiter in Richtung einer vertikalen Fahrzeuglängsmittelebene verlagert als sein rückwärtiges Ende. Das Gelenk 15 ist mit den seitlichen Rahmenteilen 4, 5 im Nahbereich der Teilungsfuge 7 verbunden. Das vordere Rahmenteil 4 ist im Verlauf seiner Längserstreckung in einem von der Trennfuge 7 entfernten Bereich an dem Gelenk 17 geteilt in den bezüglich einer vertikalen Fahrzeuglängsebene nicht schwenkbaren vorderen Abschnitt 4a und den demgegenüber um eine vertikale Achse 18 des Gelenks 17 in Richtung der vertikalen Fahrzeuglängsmittelebene 19 einschwenkbaren Abschnitt 4b. Das hintere Rahmenteil 5 ist im Verlauf seiner Längserstreckung ebenfalls in einem von der Trennfuge 7 entfernten Bereich an dem Gelenk 20 geteilt in den bezüglich einer vertikalen Fahrzeuglängsebene nicht schwenkbaren hinteren Abschnitt 5a und einen demgegenüber um eine vertikale Achse 21 des Gelenks 20 in Richtung der vertikalen Fahrzeuglängsmittelebene 19 einschwenkbaren Abschnitt 5b.

Das hintere Dachteil 2 und das flexible Dachteil 3 bilden in jeder Phase ihrer Bewegung eine zusammenhängende Dachaußenfläche aus, die nicht - etwa im Bereich des Übergangs vom Dachteil 2 zum Dachbereich 3 - durch eine offene Fuge unterbrochen ist. Dabei kann der textile Bezug 12 entweder an dem festen Dachteil 2 angehängt sein oder diesen mit übergreifen.

Hier ist eine Ausführung dargestellt, in der das hintere Dachteil 2 insgesamt als Glas- oder Kunststoffkuppel ausgebildet ist und an seiner vorderen Kante 22 mit dem Bezug 12 verbunden ist, ohne von diesem übergriffen zu sein. Um die Innenraumaufheizung zu vermindern, kann das kuppelartige hintere Dachteil dabei außerhalb eines mittleren Durchsichtsbereich mit einer dunklen, licht- und/oder wärmeabsorbierenden Beschichtung versehen sein.

Das hintere Dachteil 2 ist über ein insgesamt mit 23 bezeichnetes Gestänge an jeder Fahrzeugseite mit einem Hauptlager 24 verbunden, um das herum das hintere Dachteil 2 um eine in Fahrzeugquerrichtung weisende Horizontalachse aufgeschwenkt werden kann. Das Gestänge 23 umfaßt zwei Antriebsorgane 25, 26. Das Antriebsorgan 25 ist kolbenstangenseitig über einen Hebel Gh mit einem Gelenkparallelogramm G verbunden. Dieses umfaßt die vier Teile G1, G2, G3 und G4, die an den Schwenkgelenken GS1, GS2, GS3 und GS4 miteinander verbunden sind. Die Schwenkachsen dieser Gelenke verlaufen horizontal und in Fahrzeugquerrichtung. Mit den Gelenken GS3 und GS4 greift das Viergelenk G am rückwärtigen Ende des vorderen Dachteils an, wodurch mit der Betätigung dieses Viergelenks G eine Relativbewegung zwischen den Dachteilen 2 und 3 bewirkbar ist.

Das Antriebsorgan 26 greift hingegen kolbenstangenseitig an einem ersten Lenker H1 des zweiten Gelenkparallelogramms H an. Der Lenker H1 erstreckt sich darin parallel zum Lenker H3. Dazwischen liegen die Lenker H2 und H4, über die Gelenke HS1 bzw. HS 2 mit dem Lenker H1 und über die Gelenke HS 3 bzw. HS 4 mit dem Lenker H3 verbunden sind. Im Ausführungsbeispiel sind die Antriebsorgane 25, 26 derart angeordnet, daß mit deren Hilfe eine nahezu vertikale Hubbewegung des Dachteils 2 vermittelbar ist. Die Relativbewegung des vorderen Dachteils 3 kann in einer unbeweglichen Stellung des hinteren Dachteils 2 stattfinden.

Zudem ist noch ein drittes Antriebsorgan 27 vorgesehen, das an einem Haupthebel 28 angreift und dadurch eine Schwenkbewegung mit einem großen Schwenkwinkel um das Hauptlager 24 bewirken kann.

In geschlossener Stellung des Daches liegt das hintere Dachteil 2 mit seiner rückwärtigen Kante 35 auf einem Deckelteil 29 auf. Dieser dient in Doppelfunktion sowohl zum Abdecken des Verdeckkastens als auch des Kofferraums. Entsprechend kann das Deckelteil 29 in einem ersten Sinne zur Freigabe einer Durchtrittsöffnung für das Dach und in einem zweiten Sinne zur Freigabe einer Beladeöffnung für den Kofferraum geöffnet werden. Das Deckelteil ist hierfür zweiteilig ausgebildet, wobei der vordere Teil 30 an einer Querfuge 31 an den hinteren Teil 32 anschließt. Der vordere Teil 30 ist mit seinem in Fahrtrichtung F vorderen Ende in einer Längsführungskulisse beweglich gehalten und im Bereich der Querfuge 31 mit dem hinteren Teil 32 schwenkbar verbunden. Der hintere Teil 32 ist an seiner rückwärtigen Kante schwenkbar an der Fahrzeugkarosserie 33 angelenkt. Die Schwenkbewegung des hinteren Teils 32 des Deckelteils 29 ist durch zumindest ein im Bereich der rückwärtigen Anlenkung des hinteren Teils 32 gelegenen Antriebsorgan bewirkbar.

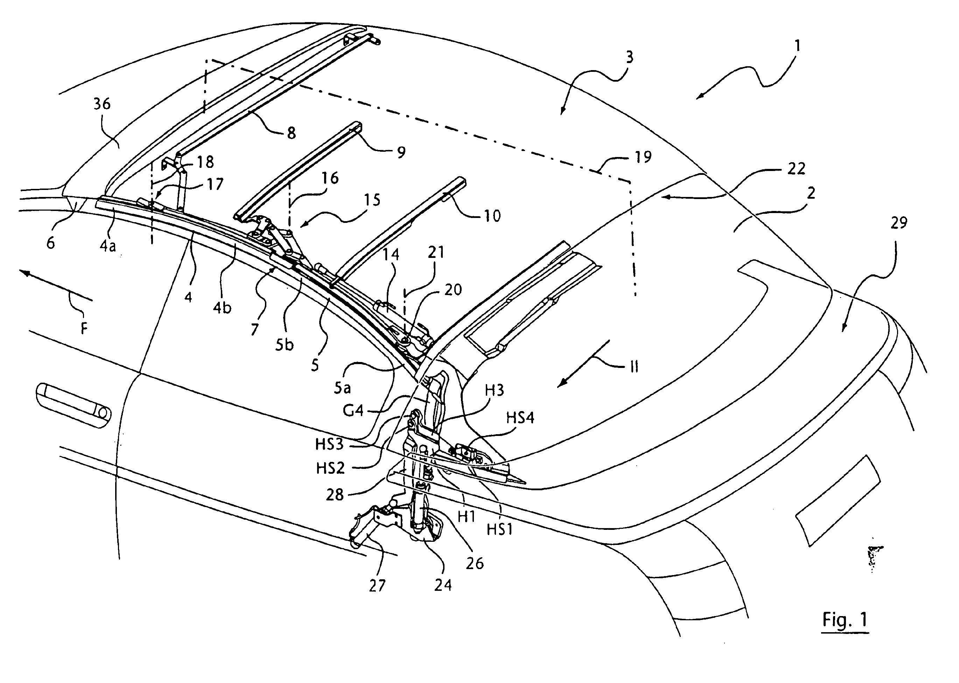

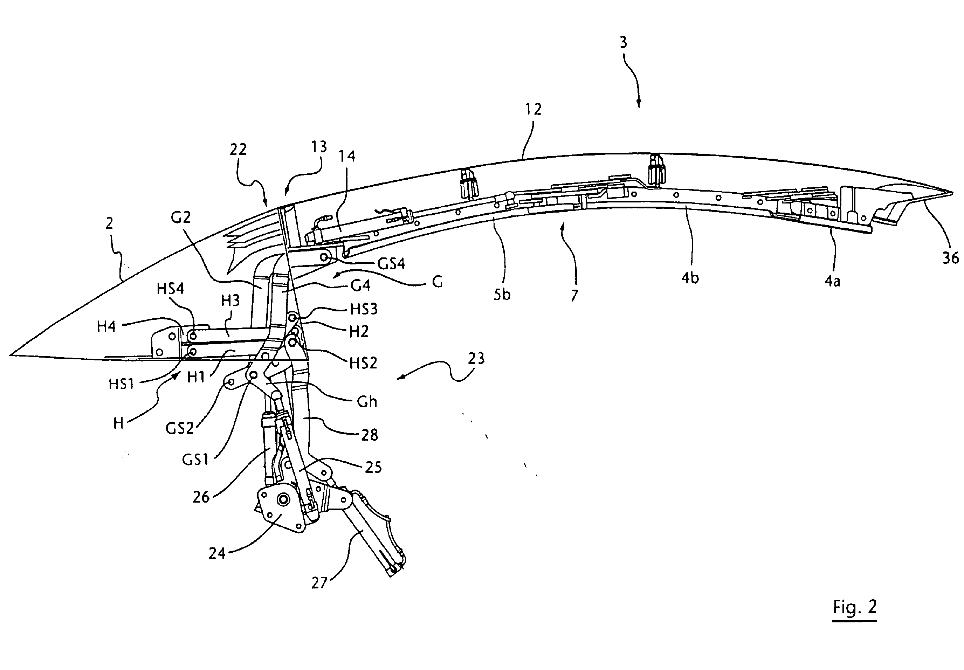

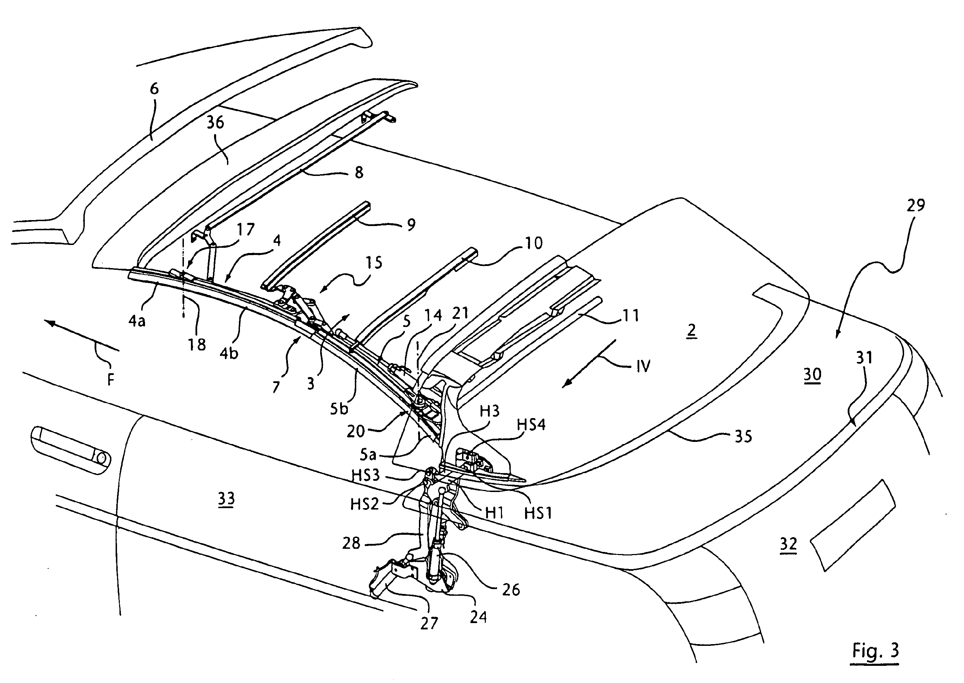

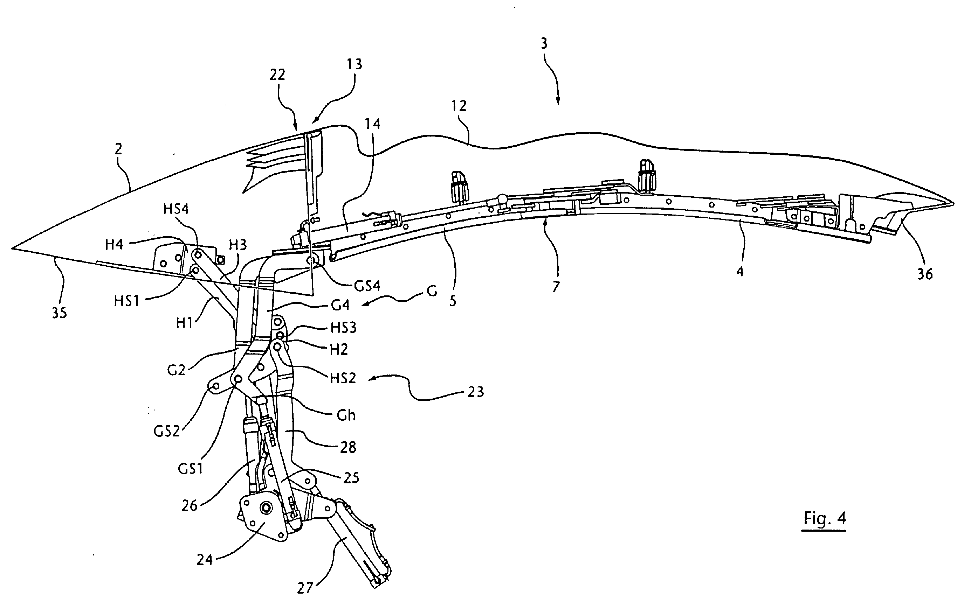

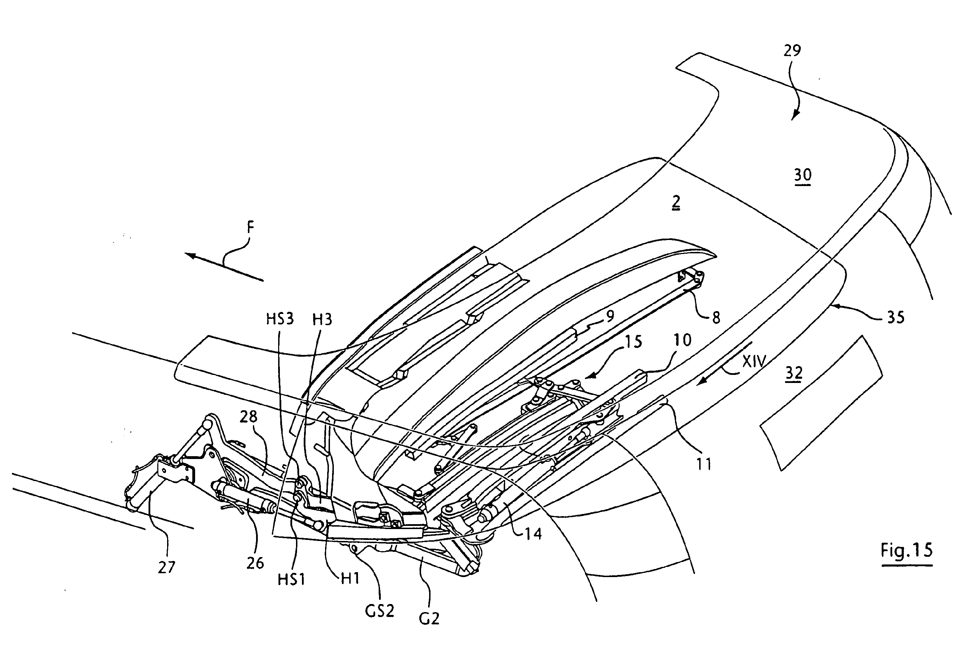

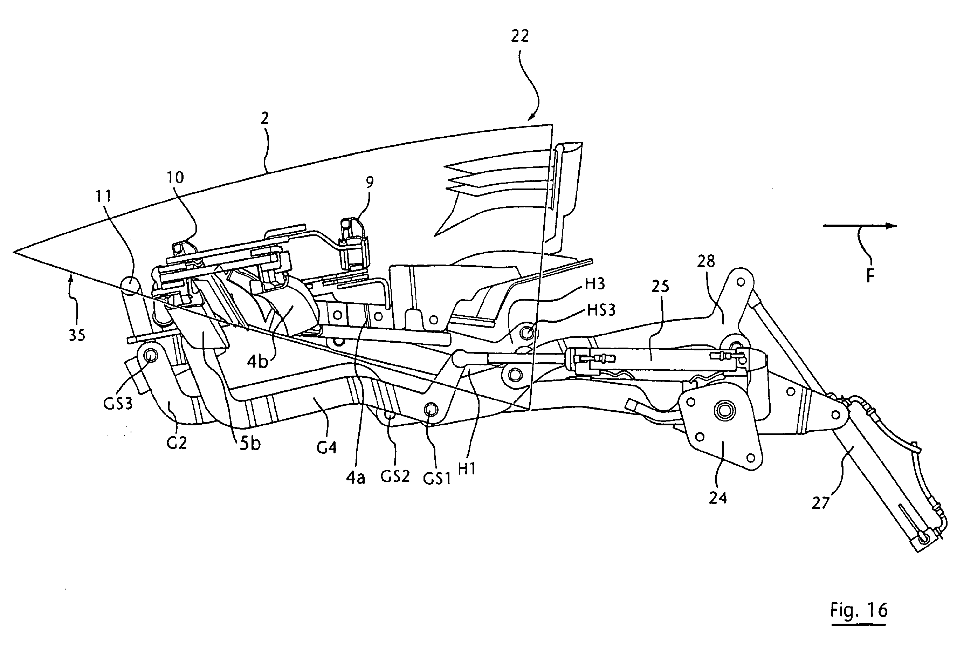

Um das Dach aus seiner geschlossenen Stellung gemäß den Figuren 1 und 2 in die Offenstellung nach den Figuren 15 und 16 zu überführen, findet der folgende Ablauf statt:
In einem ersten Schritt (Figuren 3 und 4) wird das hintere Dachteil 2 angehoben. Dieses Anheben kann als rein vertikale Hubbewegung stattfinden. Hierfür wird das hintere Antriebsorgan 26 ausgefahren. Dadurch, daß die Gelenke HS2 und HS3 zunächst durch den unbewegten Haupthebel 28 in einer karosseriefesten Position gehalten sind, wird durch das Antriebsorgan 26 das Viergelenk H derart geöffnet, das die Lenker H1 und H3 um die genannten Gelenke HS2 und HS3 aufschwenken, so daß die hinteren Gelenke HS1 und HS4, die an dem hinteren Dachteil 2 gehalten sind, vorwärts und aufwärts verschwenken. Das hintere Dachteil hebt dadurch um einige Zentimeter vom Deckelteil 29 ab. Das Abheben ist durch das Gelenkparallelogramm als Kombinationsbewegung aus Hub- und Schwenkbewegung ausgebildet. Das Dachteil 2 wird dabei in geringem Maß über den flexiblen Dachbereich 3 geschoben, wodurch dessen Bezug 12 entspannen kann.

In dieser Stellung des hinteren Dachteils 2 kann der Verdeckkastendeckel 29 geöffnet werden. Hierfür wird dessen heckseitiges Teil 32 durch das oder die zugeordneten Antriebsorgane - nicht dargestellt - gegenüber der Karosserie 33 aufgeschwenkt. Durch die Kopplung des Teils 32 mit einem vorderen Teil 30 des Verdeckkastendeckels 29 wird dieses mit entgegen der Fahrtrichtung F gezogen. Dabei ist das vordere Ende des vorderen Teils 30 in einer Längsführungskulisse gehalten.

Die Zugbewegung auf das vordere Teil 31 bewirkt daher gleichzeitig ein Anheben seiner vorderen Kante. Seine hintere Kante wird durch das Aufschwenken des hinteren Teils 32 deutlicher angehoben und gleichzeitig heckwärts unter dem hinteren Dachteil 2 weggezogen. In Anpassung hieran ist in dieser Bewegungsphase der umlaufende rückwärtige Rand 35 des hinteren Dachteils 2 leicht heckwärts aufwärts gestellt. Insgesamt muß zum Ermöglichen der Verdeckkastendeckelöffnung das hintere Dachteil 2 nur um ein geringes Maß angehoben werden. Die Gesamtbewegung ist dadurch beschleunigt.

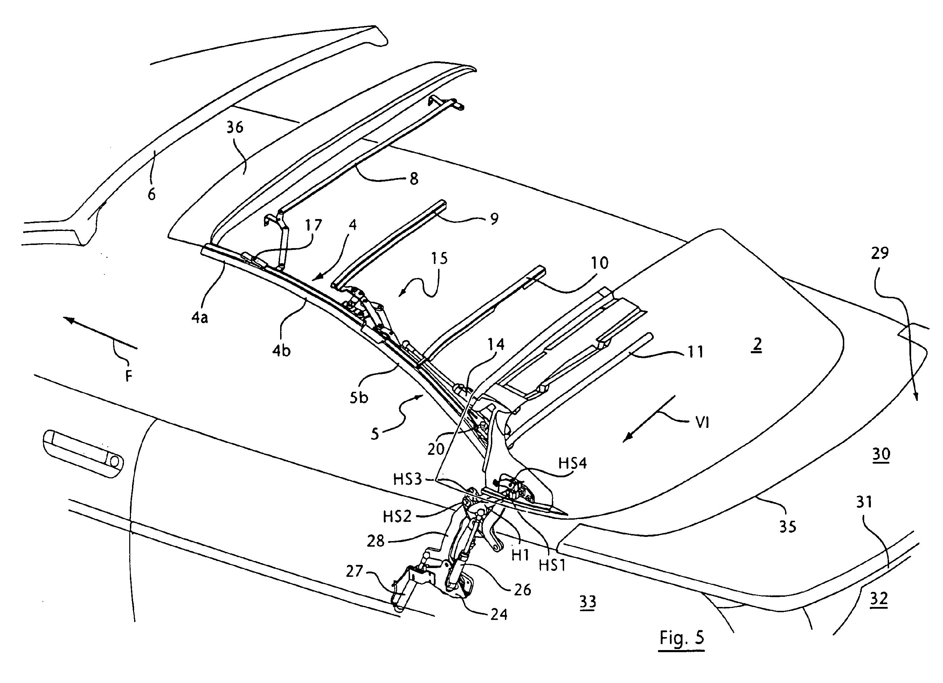

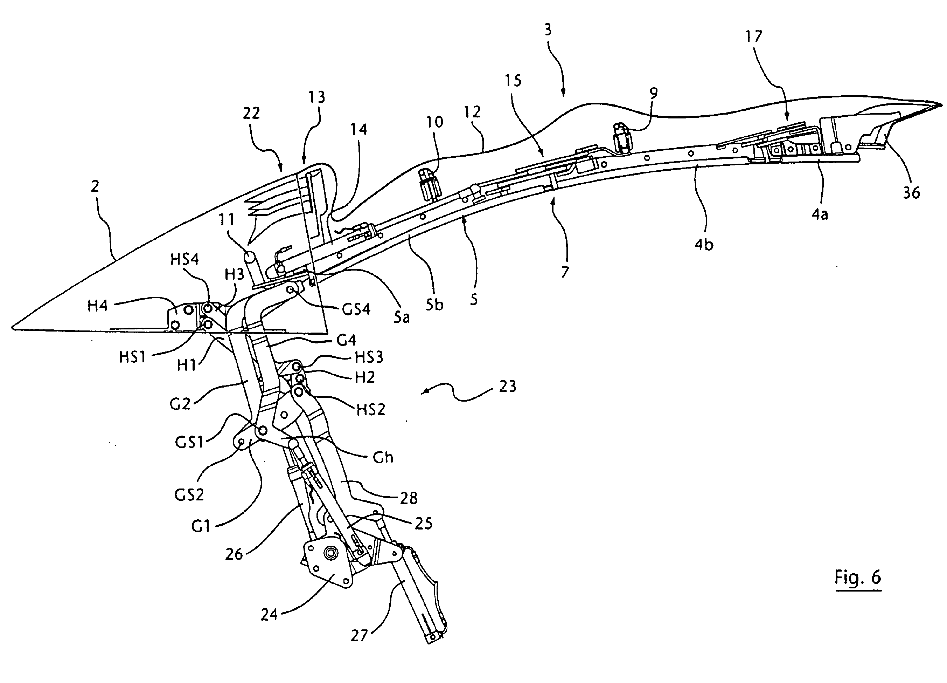

Zur weiteren Öffnung wird das Dach zunächst durch Betätigung des Antriebsorgans 27 über den Haupthebel 28 ein Stück weit heckwärts verschwenkt (Figuren 5 und 6), wodurch die Kopffreiheit für die Insassen vergrößert wird. Gleichzeitig wird der gesamte flexible Dachbereich 3 im noch nicht verkürzten Zustand durch Betätigung des Antriebsorgans 25 heckwärts in Richtung unter das hintere Dachteil 2 verlagert.

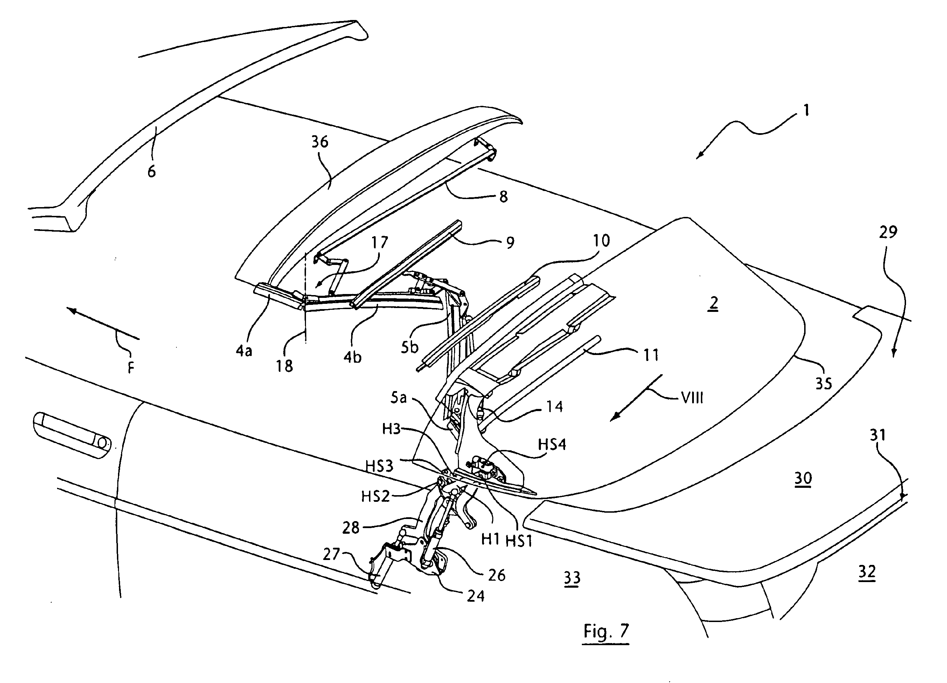

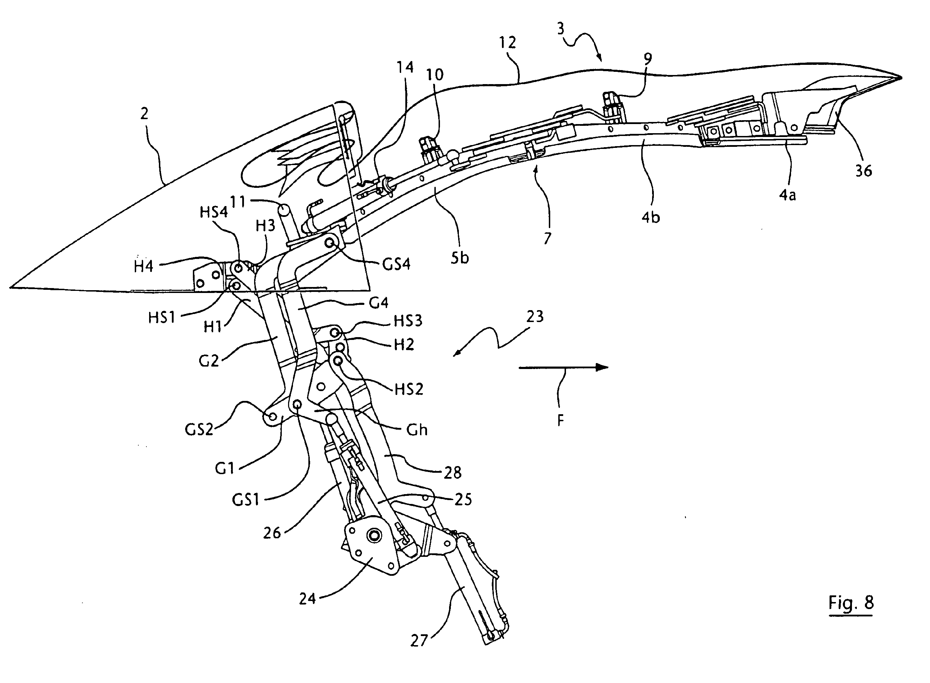

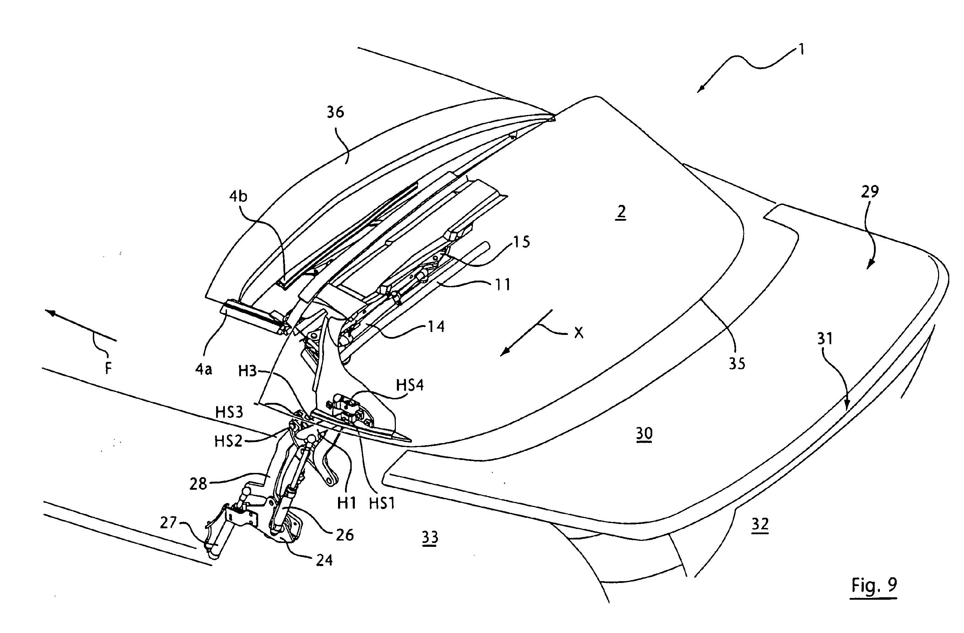

Aus dieser Position heraus beginnt die Einfaltbewegung des flexiblen Dachbereichs 3 (Figuren 7 bis 10). Dabei können die Antriebsorgane 25, 26 und 27 in konstanter Stellung verbleiben. Das im wesentlichen horizontal liegende Antriebsorgan 14 wird angezogen, wodurch das Gelenk 15, das im Ausführungsbeispiel als horizontal liegendes und um eine vertikale Achse schwenkbares Gelenk nach Art eines als Scherengitter ausgebildeten Siebengelenks ausgebildet ist, geöffnet wird. Dieses ist mit dem vorderen seitlichen Rahmenteil 4 sowie mit dem rückwärtigen Rahmenteil 5 jeweils im Nahbereich der Trennfuge 7 verbunden und übt auf diese ein Drehmoment aus. Dieses zieht die Abschnitte 4b und 5b in Richtung der vertikalen Fahrzeuglängsmittelebene 19 einwärts. Der Abschnitt 4b schwenkt dabei gegenüber dem vorderen, seine Längsorientierung beibehaltendem Abschnitt 4a um die vertikale Achse 18 des Gelenks 17 ein; der Abschnitt 5b des hinteren Rahmenteils 5 schwenkt dabei gegenüber seinem hinteren, seine Längsorientierung beibehaltendem Abschnitt 5a um die vertikale Achse 21 des Gelenks 20 ein.

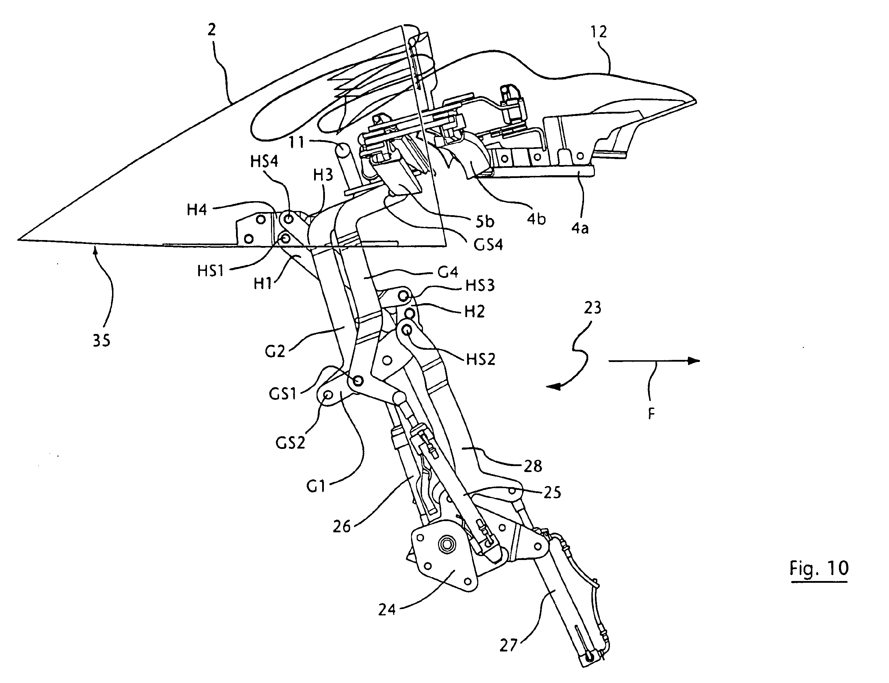

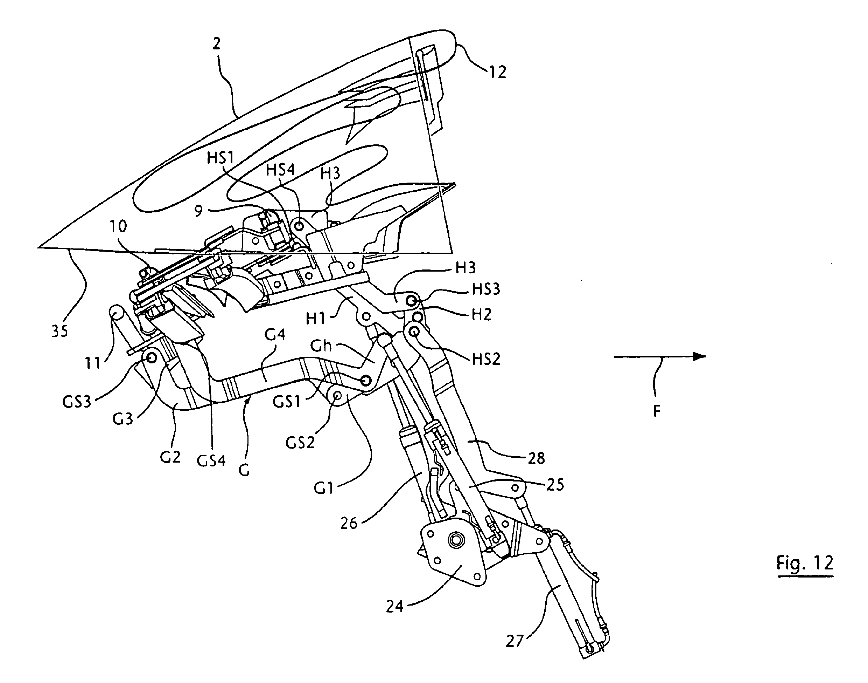

Bei der Verkürzung des flexiblen Dachbereichs 3 lösen sich die Spriegel 10,11 von dem Dachbezug 12, so daß dieser gegenüber den ihn untergreifenden Teilen beweglich wird. Es können Zugbänder oder dergleichen Mittel - nicht dargestellt - vorgesehen sein, um eine Zwangseinfaltung des Bezuges 12 zu gewährleisten, wodurch dieser die beispielsweise in den Fig. 10 und 12 dargestellte Faltungsstruktur erreicht und während der Verkürzung des flexiblen Dachbereichs 3 sich in definierter Weise ohne Ausbildung von scharfen Knicken einfaltet.

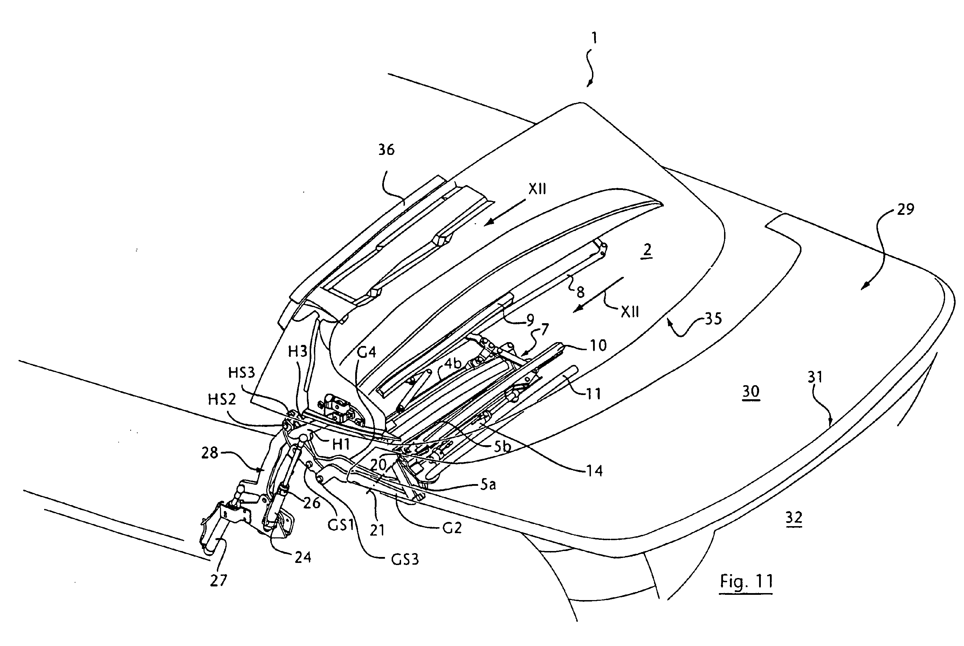

Die Abschnitte 4b, 5b werden durch das Antriebsorgan 14 derart weit um die Gelenke 17 bzw. 20 eingeschwenkt, daß sie am Ende der Dachverkürzung (Fig. 11, Fig. 12) sich im wesentlichen vollständig in Fahrzeugquerrichtung erstrecken. Die Teilungsfuge 7 liegt dann nahe der vertikalen Fahrzeuglängsmittelebene 19. Das Antriebsorgan 14 ist ebenfalls in eine quer zur Fahrtrichtung F weisende Stellung verschwenkt worden. Während der Verkürzung des flexiblen Dachbereichs 3 wird gleichzeitig durch Öffnen des Viergelenks G über das Antriebsorgan 25, das an dem Hebel Gh angreift und dadurch die Hebel G2 und G4 um die Gelenke GS1 und GS2 in eine im wesentlichen horizontale Position bringt, das rückwärtige Ende des flexiblen Dachbereichs 3 nach hinten gezogen, wodurch der hintere Spriegel 11 etwa in den Bereich der rückwärtigen Kante 35 des starren hinteren Dachteils 2 gelangt. Durch die Loslösung des Dachbezugs 12 kann dessen rückwärtiges Ende an der vorderen Kante des hinteren Dachteils 2 befestigt bleiben, ohne unter Spannung zu geraten (sh. Fig. 12).

Wie in Fig. 12 deutlich wird, ist die Längserstreckung des so gebildeten Pakets außerordentlich gering und ist im wesentlichen bestimmt durch das Längsausmaß des hinteren starren Dachteils 2. Der Dachbezug kann in seinen einzelnen Bereichen eng aufeinander liegen, ohne daß Spriegel oder dergleichen die Mindesthöhe des entstehenden Pakets begrenzen würden. Durch Absenkung des starren Dachteils 2 wird in dieser Phase der Bewegung die Höhe des anschließend abzulegenden Daches vermindert, es bildet sich ein flaches Paket.

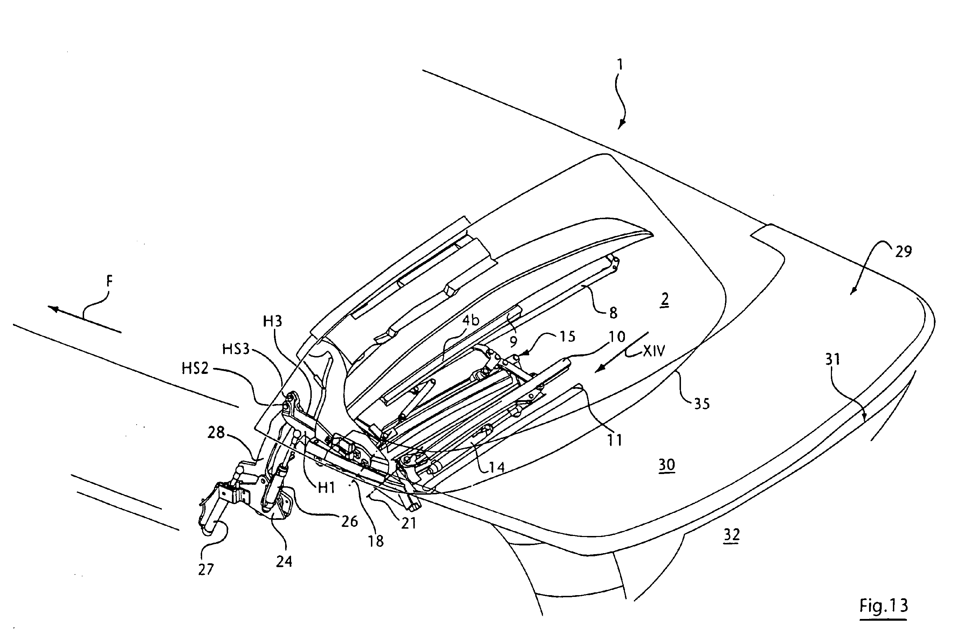

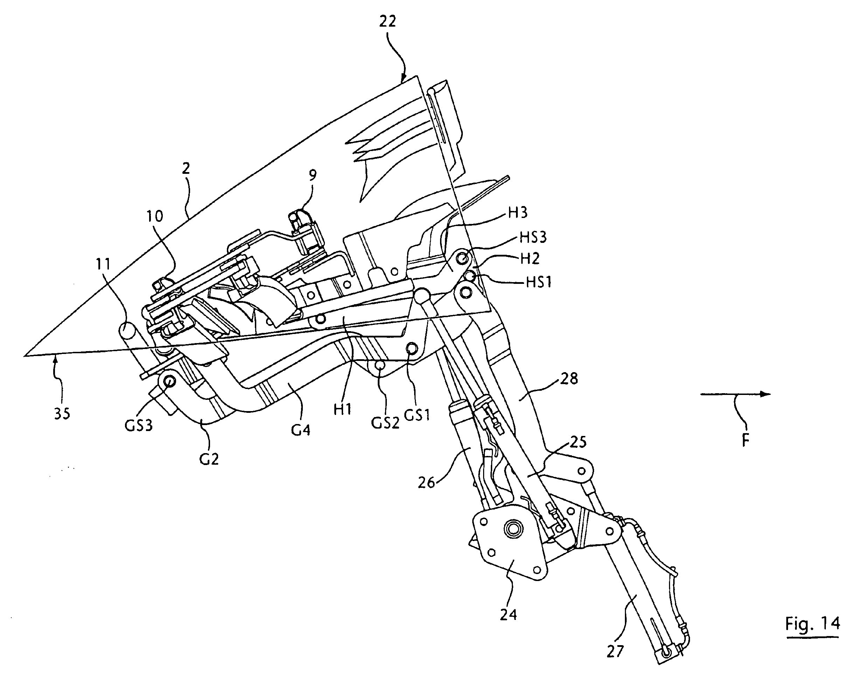

Das so entstandene Paket, das oberseitig von dem starren Dachteil 2 begrenzt ist, wird durch Ausfahren des Antriebsorgans 27 und damit verbundenes Aufschwenken des Haupthebels 28 in eine nahezu horizontale Stellung (Fig. 13 bis 16) rückwärtig verschwenkt und dabei unterhalb der Fensterbrüstungslinie derart abgelegt, daß auch in geschlossener Stellung das starre rückwärtige Dachteil das abgelegte Dach nach oben hin begrenzt. Gleichzeitig wird das Antriebsorgan 25, das direkt auf das Mehrgelenk G einwirkt, ein Stück weit eingefahren.

Insgesamt ist somit ein sehr kurzes und gleichzeitig in der Höhe minimiertes Paket entstanden, wodurch das abgelegte Dach im Kofferraum nur wenig Platz beansprucht und dieser nur geringfügig eingeschränkt ist.

Es versteht sich, daß die einzelnen Bewegungsphasen ohne Unterbrechungen unmittelbar hintereinander ablaufen und auch überlappen können, wodurch sich eine besonders schnelle Dachbewegung ergibt.

## Patentansprüche

1. Cabriolet-Fahrzeug (1) mit einem im rückwärtigen Fahrzeugbereich unterhalb eines Deckelteils (29) ablegbaren Dach, das einen starren, eine Heckscheibe umfassenden hinteren Dachteil (2) sowie einen sich an das starre hintere Dachteil (2) in Fahrtrichtung (F) anschließenden, Rahmenteile (4,5) sowie einen Dachbezug aus einem flexiblen Material umfassenden, faltbaren Dachbereich (3) aufweist, **dadurch gekennzeichnet, daß** zur Öffnung des Daches der vordere Dachbereich (3) verkürzbar und einfaltbar ausgebildet und der vordere Dachbereich (3) zumindest teilweise als Paket unter das hintere Dachteil (2) in eine durch das hintere Dachteil (2) oberseitig begrenzte Paketstellung bewegbar ist und daß das Paket aus starrem Dachteil (2) und dem zumindest bereichsweise darunterliegenden flexiblen Dachbereich (3) zusammen ablegbar ist.

2. Cabriolet-Fahrzeug nach Anspruch 1, **dadurch gekennzeichnet, daß** der vordere Dachbereich (3) vollständig unter das hintere Dachteil (2) verlagerbar ist.

3. Cabriolet-Fahrzeug nach Anspruch 1 oder 2, **dadurch gekennzeichnet, daß** zum Öffnen des Daches zunächst das hintere starre Dachteil (2) anhebbar und anschließend der vordere Dachbereich (3) unter das hintere starre Dachteil (2) bewegbar ist.

4. Cabriolet-Fahrzeug nach Anspruch 3, **dadurch gekennzeichnet, daß** das hintere starre Dachteil (2) gegenüber einem Deckelteil (29) anhebbar ist.

5. Cabriolet-Fahrzeug nach Anspruch 4, **dadurch gekennzeichnet, daß** das hintere Dachteil (2) im wesentlichen vertikal anhebbar ist.

6. Cabriolet-Fahrzeug nach Anspruch 4 oder 5, **dadurch gekennzeichnet, daß** das Deckelteil (29) nach Anheben des hinteren starren Dachteils (2) in seine Öffnungsstellung überführbar ist.

7. Cabriolet-Fahrzeug nach einem der Ansprüche 1 bis 6, **dadurch gekennzeichnet, daß** der flexible Dachbereich (3) einen Scherengittermechanismus umfaßt, der bei einer Einfahrbewegung eine Verkürzung der in Fahrtrichtung erstreckten Länge des flexiblen Dachbereiches (3) bewirkt.

8. Cabriolet-Fahrzeug nach einem Ansprüche 1 bis 7, **dadurch gekennzeichnet, daß** der flexible Dachbereich (3) an seiner Anbindung zum hinteren, starren Dachteil (2) eine durch mechanische Abstützung (8; 9; 10; 11) unterstützbare, flexible Bespannung (12) umfaßt, die während der gesamten Öffnungs- oder Schließbewegung des Daches mit dem hinteren Dachteil (2) in Verbindung bleibt und hierfür von der mechanischen Unterstützung (8; 10; 11) abhebbar ist.

9. Cabriolet-Fahrzeug nach einem Ansprüche 1 bis 8, **dadurch gekennzeichnet, daß** das Paket aus starrem Dachteil (2) unter darunterliegendem flexiblen Dachteil (3) in gleichbleibender Orientierung abwärts verschwenkbar ist.

## Claims

1. A cabriolet vehicle (1) with a roof which can be stored in the back vehicle area underneath a cover part (29), having a rigid rear roof part (2) including a rear window and a foldable roof area (3) which is linked to the rigid rear roof part (2) in the direction of travel (F) and which includes frame parts (4, 5) and a roof covering made of a flexible material, **characterised in that**, in order to open the roof, the front roof area (3) is formed so as to be able to be contracted and folded in and the front roof area (3) is movable at least partially as a packet under the rear roof part (2) into a packet position which is bordered on the upper side by the rear roof part (2), and **in that** the packet made up of the rigid roof part (2) and the flexible roof area (3) which lies under it at least in areas, can be stored together.

2. The cabriolet vehicle according to Claim 1, **characterised in that** the front roof area (3) can be fully displaced under the rear roof part (2).

3. The cabriolet vehicle according to Claim 1 or 2, **characterised in that**, in order to open the roof, the rear rigid roof part (2) can firstly be lifted and then the front roof area (3) can be moved under the rear rigid roof part (2).

4. The cabriolet vehicle according to Claim 3, **characterised in that** the rear rigid roof part (2) can be lifted in relation to a cover part (29).

5. The cabriolet vehicle according to Claim 4, **characterised in that** the rear roof part (2) can be lifted substantially vertically.

6. The cabriolet vehicle according to Claim 4 or 5, **characterised in that** the cover part (29) can be conveyed into its opening position after the rear rigid roof part (2) is lifted.

7. The cabriolet vehicle according to one of Claims 1 to 6, **characterised in that** the flexible roof area (3) includes a slidable lattice grate mechanism which, when a retracting movement takes place, causes a contraction of the length, extending in the direction of travel, of the flexible roof area (3).

8. The cabriolet vehicle according to one of Claims 1 to 7, **characterised in that** the flexible roof area (3), at its connection to the rear rigid roof part (2), includes a flexible covering (12) which is supported by means of mechanical support (8; 9; 10; 11) and which remains joined to the rear roof part (2) during the entire opening or closing movement of the roof and, for this purpose, can be lifted from the mechanical support (8; 10; 11).

9. The cabriolet vehicle according to one of Claims 1 to 8, **characterised in that** the packet made up of the rigid roof part (2) is downwardly pivotable under the flexible roof part (3) lying under it with constant orientation.

## Revendications

1. Véhicule cabriolet (1) comprenant un toit pouvant être rangé dans la région arrière du véhicule en dessous d'une partie de couvercle (29), qui présente une partie de toit arrière (2) rigide, comprenant un hayon arrière ainsi qu'une région de toit pliable (3) se raccordant à la partie de toit arrière (2) rigide dans la direction de conduite (F), comprenant des parties de cadre (4, 5) ainsi qu'un revêtement de toit en matériau flexible, **caractérisé en ce que** pour l'ouverture du toit, la région de toit avant (3) est réalisée de manière à pouvoir être raccourcie et repliée et la région de toit avant (3) peut être déplacée au moins en partie sous forme de paquet sous la partie de toit arrière (2) dans une position de paquet limitée du côté supérieure par la partie de toit arrière (2) et **en ce que** le paquet constitué de la partie de toit rigide (2) et de la région de toit flexible (3) au moins en partie située en dessous peut être rangé en un groupe.

2. Véhicule cabriolet selon la revendication 1, **caractérisé en ce que** la région de toit avant (3) peut être complètement déplacée sous la partie de toit arrière (2).

3. Véhicule cabriolet selon la revendication 1 ou 2, **caractérisé en ce que** pour l'ouverture du toit, la partie de toit arrière (2) rigide peut d'abord être soulevée et ensuite la région de toit avant (3) peut être déplacée sous la partie de toit arrière (2) rigide.

4. Véhicule cabriolet selon la revendication 3, **caractérisé en ce que** la partie de toit arrière (2) rigide peut être soulevée par rapport à une partie de couvercle (29).

5. Véhicule cabriolet selon la revendication 4, **caractérisé en ce que** la partie de toit arrière (2) peut être soulevée essentiellement verticalement.

6. Véhicule cabriolet selon la revendication 4 ou 5, **caractérisé en ce que** la partie de couvercle (29) peut être transférée dans sa position d'ouverture après le soulèvement de la partie de toit arrière (2) rigide.

7. Véhicule cabriolet selon l'une quelconque des revendications 1 à 6, **caractérisé en ce que** la région de toit flexible (3) comprend un mécanisme de grille à ciseaux qui, dans le cas d'un mouvement d'insertion, provoque un raccourcissement de la longueur s'étendant dans la direction de conduite de la région de toit flexible (3).

8. Véhicule cabriolet selon l'une quelconque des revendications 1 à 7, **caractérisé en ce que** la région de toit flexible (3) comprend au niveau de sa liaison avec la partie de toit arrière (2) rigide, un voile tendu (12) flexible pouvant être supporté par un support mécanique (8 ; 9 ; 10 ; 11), qui reste en liaison avec la partie de toit arrière (2) pendant tout le mouvement d'ouverture ou de fermeture du toit et qui peut être soulevé à cet effet du support mécanisme (8 ; 10 ; 11).

9. Véhicule cabriolet selon l'une quelconque des revendications 1 à 8, **caractérisé en ce que** le paquet constitué de la partie de toit (2) rigide peut être pivoté vers le bas sous la partie de toit flexible sous-jacente (3) dans une orientation constante.
